Europäisches Patentamt

European Patent Office

Office européen des brevets

(11) Publication number: **0 033 221**
**A1**

(12) # EUROPEAN PATENT APPLICATION

(21) Application number: **81300268.0**

(22) Date of filing: **21.01.81**

(51) Int. Cl.³: **F 16 J 15/32**

(30) Priority: **28.01.80 DK 349/80**

(43) Date of publication of application:
**05.08.81 Bulletin 81/31**

(84) Designated Contracting States:
**AT BE CH DE FR GB IT LI LU NL SE**

(71) Applicant: **W.S. SHAMBAN EUROPA A/S
(W.S.SHAMBAN & COMPANY A/S)
No. 17, Fabriksvej
DK-3000 Helsingor(DK)**

(72) Inventor: **Lorentzen, Ove
No. 38, Helsingorvej
DK-3200 Helsinge(DK)**

(72) Inventor: **Hansen, Finn Rud
No. 2, Lindestien
DK-3000 Helsingor(DK)**

(74) Representative: **Ford, Michael Frederick et al,
MEWBURN ELLIS & CO. 70/72 Chancery Lane
London WC2A 1AD(GB)**

(54) **A sealing device with an encapsulated energizing spring.**

(57) In a sealing device comprising a sealing member (24) consisting mainly of a plastics material having high chemical and thermal resistance and high wearability and being formed with at least one closed, endless sealing surface (25, 25a), an annular spring (23) arranged in the sealing member (24) close to the sealing surface (25, 25a) and exerting the spring pressure in the direction towards the sealing surface (25, 25a) for energizing the seal is protected against contact with the medium, for which sealing should be effected by being enclosed by the material in the sealing member (24) on all sides.

The enclosure may be provided either by encapsulating the spring (23) in the plastics material during manufacture of the sealing member (24), or by arranging the spring in an open incision formed for this purpose in a finished member of the plastics material and subsequent closure of the incision with the spring by means of a covering layer, which is inseparably connected with the plastics material. The sealing device may be designed as a usual sealing ring, as well as an integrated seal piston.

FIG 1

1

A sealing device with an encapsulated energizing spring.

The invention relates to a sealing device, comprising a sealing member consisting mainly of a plastic having a high chemical and thermal resistance and a high wearability, particularly polytetrafluorethylene, said member having at least one closed, endless sealing surface, and a metal spring inserted with an annular shape into said sealing member close to said sealing surface and exerting a spring pressure in the direction towards said sealing surface for energizing the seal.

In recent years, sealing materials of the above-mentioned kind, particularly polytetrafluorethylene in pure form or with the addition of fillers, have found wide application for static as well as dynamic seals for rotating as well as linear movement in cases where seals of more traditional materials such as rubber do not comply with the requirements to proportional reliability and lifetime in the environment in which the seal should operate.

In addition to the high resistance towards chemical attacks, the high thermal resistance and the high wearability, a further considerable advantage relative to traditional rubber seals is that the sealing material does not exert any contaminating effect towards the medium contacted by the sealing device. These advantages have resulted in wide application in equipment for use in the production of food stuffs and medicals and in hospital equipment, such as blood treatment apparatus.

An inferior characteristic of polytetrafluorethylene and certain other plastics materials with respect to sealing qualities is their relatively low elasticity, as a result of which sealing devices of such materials cannot be made leakagefree without special precautions.

It has been attempted to remedy this disadvantage by different kinds of combination seals comprising a sealing ring of said material in connection with one or more sealing rings of rubber or a similar elastomeric
material, normally usual O-rings. An example of this is
known from US patent specification No. 3,814,445.

For the above-mentioned applications, in which remedying of the said disadvantage by combination with traditional sealing rings of rubber must be abstained from
due to the requirements on resistance towards chemical
attacks, thermal resistance and high wearability, sealing
devices of the kind mentioned in the preamble having an
inserted     energizing spring of metal, particularly
stainless steel, are known from German published patent
applications Nos. 2,310,365 and 1,750,819.

As disclosed in the former of the above-mentioned
published applications, it is common to most prior art
designs that the spring is inserted in an open incision
or groove in the sealing ring with the opening facing
the medium, for which sealing should be obtained, so
that a possible pressure influence from said medium will
act in the same direction as the spring pressure. However, as special designs sealing rings of this kind are
also known, in which the opening of the incision faces
away from said medium, such as disclosed in the latter
of the above-mentioned published applications.

Even if the spring is normally manufactured from
stainless steel in order to comply with the requirement
to resistance towards chemical attacks, the spring material will have inferior characteristics in this respect
relative to the sealing material per se and, in addition,
stainless steel will normally have less satisfying spring
characteristics.

Even in case of the above-mentioned special designs,
it is not secured that the medium in question will not
have access to the spring in case of leakage. This can
lead to corrosion of the spring, on one hand, and, on
the other hand, cause a collection of impurities in the
cavity, in which the spring is arranged. The disadvantage
of contamination becomes further aggravated by the fact that cleaning of the spring and said cavity is very difficult. Thereby, the seal will be less suitable for use in connection with food stuffs and in medical equipment.

According to the invention, these disadvantages for a sealing device of the kind referred to are remedied in that said spring is enclosed by the material of said sealing member on all sides.

By the invention, a full security is obtained against contact between the spring and the medium in question, whereby, in addition to removal of the above-mentioned disadvantages, it is obtained that in the choice of spring material one will not be limited to a non-corroding material, such as stainless steel, but may select a material having optimum spring characteristics, such as spring steel. Moreover, the shape of the sealing device may be optimized with a view to simple cleaning within the limits set by the desired sealing characteristics.

The encapsulation with sealing material on all sides secures that the spring is kept effectively in position with maintenance of a correct energizing function, whereby even the risk of seal failure due to displacement or rejection of the spring will be completely eliminated.

In the following, the invention will be explained in more detail with reference to the schematical drawings, in which

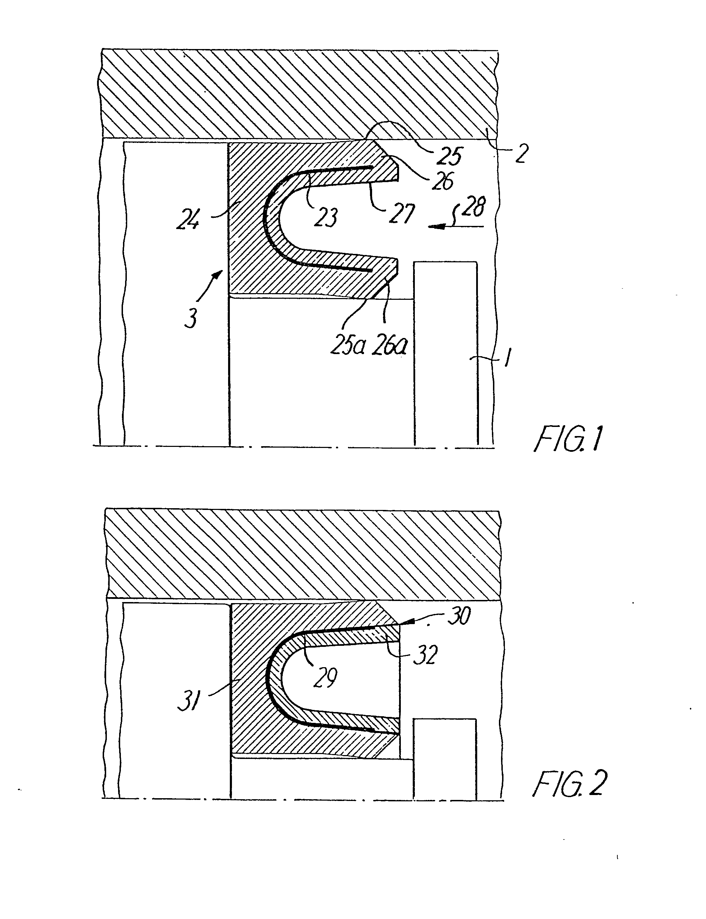

Figs. 1 to 4 illustrate different embodiments of a sealing device according to the invention.

In Fig. 1, a sealing device according to the invention is shown in an embodiment as a sealing ring 3 for use as a piston seal between a piston 1 and a cylinder wall 2. The sealing ring 3 comprises an annular member 24 which may consist of polytetrafluorethylene, said member having sealing surfaces 25 and 25a towards the cylinder wall 2 and at its opposite side. According to the invention, a spring 23 which may have a substantially V- or U-shaped cross-sectional form and may be manufactured, for example, from spring steel, is enclosed by the material in the annular sealing member 24 on all sides.

With the V- or U-shaped cross-sectional profile of the spring 23, the legs extend substantially parallel to the sealing surfaces 25 and 25a in lips 26 and 26a formed at the sealing surfaces by an incision 27 in a side of the sealing member 24 substantially perpendicular to the sealing surfaces. The wall of the incision 27 follows the cross-sectional profile of the spring 23 with a suitable thickness of the sealing material between the spring 23 and said wall. The provision of the lips 26 and 26a by means of the incision 27, which faces the medium indicated by an arrow 28, secures an optimum spring action.

In the embodiment in Fig. 1, the spring 23 is encapsulated in the sealing material during manufacture of the sealing member 24, which may take place in a manner known per se for a sealing material of the kind in question, in case of polytetrafluorethylene, thus, by an initial powder pressing operation to the desired shape followed by a heat treatment for sintering the material.

In Fig. 2, another embodiment of a sealing ring having the same cross-sectional form as in Fig. 1 is illustrated. In this case, the spring 29 which may have the same form as the spring 23 in Fig. 1 is arranged in an open incision 30 in a finished member 31 of the plastic, such as polytetrafluorethylene, whereupon the spring 29 and the part of the wall of the incision 30 not covered by the spring is completely closed by a covering layer 32, which is secured to the plastics material in the member 31 by means of welding or an adhesive bond, for example.

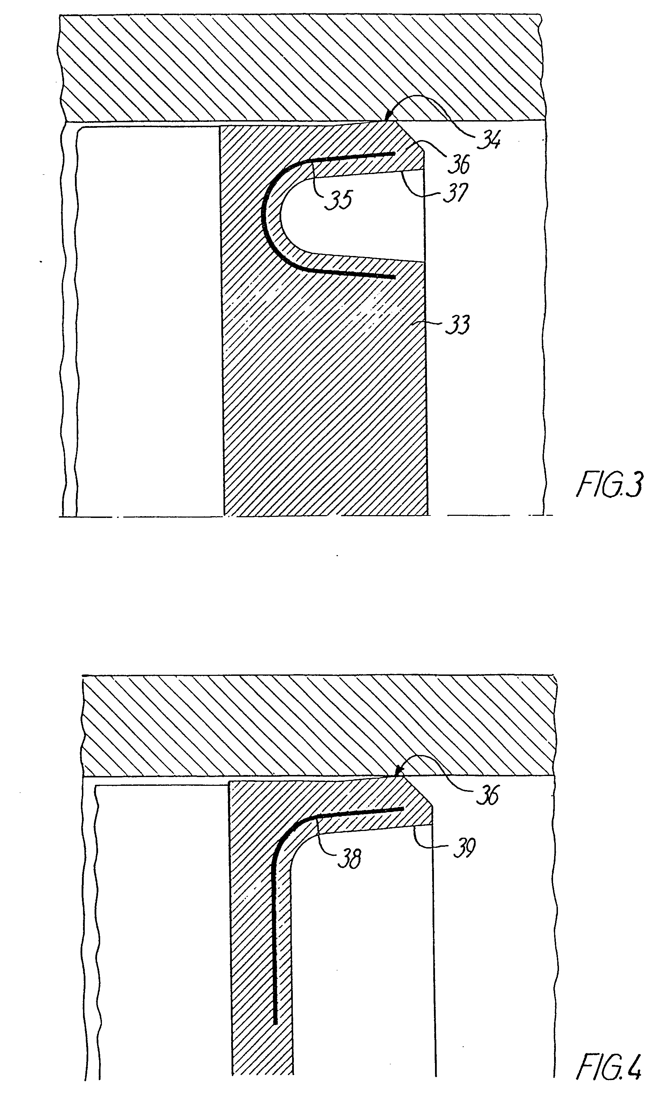

Whereas Figs. 1 and 2 show the sealing device according to the invention embodied as a sealing ring to be used, for example, as a piston seal, Fig. 3 shows a special embodiment, in which the sealing member 33 form per se a piston designed for movement in a cylinder, and having a single sealing surface 34. The spring 35 may have the same cross-sectional profile as in the embodiments of Figs. 1 and 2, i.e. a V- or U-shaped cross-sectional form with one leg extending substantially parallel to the sealing surface 34 in a lip 36, which also in this case is formed by an incision 37 in a side of the sealing member 33 substantially perpendicular to the sealing surface 34.

In this embodiment, which due to the integration of piston and seal in a common member is particularly advantageous for use in machines such as piston pumps in the food stuff or medical industries, because a piston is obtained having a smooth surface without grooves for the arrangement of piston rings, a form which is even more suitable for cleaning purposes may be obtained, as shown in Fig. 4, however, by using a spring 38 having a mainly L-shaped cross-sectional form, one leg of which extends in the lip 36 in the same manner as in the V- or U-shaped design, whereas the other leg extends substantially perpendicular to the sealing surface 34. Thereby, the incision 39 may be formed with a flat bottom parallel to the flat rear surface of the piston.

Even if the sealing device according to the invention is shown in Figs. 1 to 4 solely in embodiments as piston seals, it may, in practice, be designed for the same applications as known sealing rings having an inserted spring, i.e. as a flange seal, for example, in which the sealing surfaces are substantially flat, or as a shaft seal.

PATENT CLAIMS

1. A sealing device, comprising a sealing member (24, 31, 33) consisting mainly of a plastic having a high chemical and thermal resistance and a high wearability, particularly polytetrafluorethylene, said member having at least one closed endless sealing surface (25, 25a, 34), and a metal spring (23, 29, 35) inserted with an annular shape into said sealing member (24, 31, 33) close to said sealing surface (25, 25a, 34) and exerting a spring pressure in the direction towards said sealing surface 25, 25a, 34) for energizing the seal, characterized in that said spring (23, 29, 35) is enclosed by the material of said sealing member (24, 31, 33) on all sides.

2. A sealing device as claimed in claim 1, characterized in that said spring (23, 29, 35) has a V- or U-shaped cross-sectional form with one leg extending substantially parallel to said sealing surface (25, 25a, 34) in a lip (26, 26a, 36) formed at the sealing surface by an incision (27, 37) in a side of said sealing member (24, 31, 33) extending substantially perpenpicular to said sealing surface (25, 25a, 34).

3. A sealing device as claimed in claim 1 or 2, characterized in that said sealing member (33) forms per se a piston for movement in a cylinder.

4. A sealing device as claimed in claims 1 and 3, characterized in that said spring (38) has an L-shaped cross-sectional form with one leg extending substantially parallel to said sealing surface (34) in a lip (36) formed at the sealing surface, whereas the other leg extends substantially perpendicular to said sealing surface (34).

5. A sealing device as claimed in any of the preceding claims, characterized in that said spring (23, 35) is encapsulated in said plastic during manufacture of said sealing member (24, 33).

6.    A sealing device as claimed in any of claims 1 to 4, characterized in that said spring (29) is arranged in an open incision (30) formed for this purpose in a finished member (31) of said plastic and is enclosed in said incision (30) by a covering layer (32) connected inseparably with said plastic.

7.    A sealing device comprising a sealing member (24,31,33) formed at least principally of a plastic material having a high chemical and thermal resistance and high resistance to wear, said member having at least one endless sealing surface (25,25a,34) and a metal spring (23,29,35) in the form of a closed loop inserted into said sealing member (24,31,33) sufficiently close to said sealing surface (25,25a,34) as to cause said seal to be resiliently deformable at said sealing surface (25,25a,34), characterized in that said spring (23,29,35) is entirely enclosed by the material of said sealing member (24,31,33).

8.    A sealing device according to claim 7 wherein the plastic material is polytetrafluoroethylene.

FIG.1

FIG.2

FIG.3

FIG.4

## EUROPEAN SEARCH REPORT

European Patent Office

Application number

EP 81 30 0268.0

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | FR - A1 - 2 398 237 (B. LEONETTI) <br> * claims 1 to 3, 6; fig. 2 to 5 * <br> -- | 1,2, <br> 5-8 | F 16 J 15/32 |
| | FR - A - 782 706 (AUTOMOTIVE PRODUCTS CO. LTD.) <br> * fig. 6 * <br> -- | 1,3,4 | |
| | FR - A - 1 224 937 (C. LATTY) <br> * fig. 1, 2 * <br> -- | 1,2 | |
| | GB - A - 837 814 (REGIE NATIONALE DES USINES RENAULT) <br> * fig. 1, 3 * <br> -- | 1,2,4 | **TECHNICAL FIELDS SEARCHED (Int. Cl.³)** <br><br> F 16 J 9/00 <br> F 16 J 15/00 |
| | US - A - 3 561 776 (J.D. WILSON) <br> * column 2, lines 14 to 33; fig. 1, 15 * <br> -- | 1,2,5, <br> 6,8 | |
| A,D | DE - A - 1 750 819 (K. WIESE) <br> -- | | |
| A,D | DE - A - 2 310 365 (AEROQUIP AG) <br> -- | | |
| A,D | US - A - 3 814 445 (J.A. BITZAN) <br> ---- | | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

| | The present search report has been drawn up for all claims | | |
|---|---|---|---|
| Place of search <br> Berlin | Date of completion of the search <br> 27-03-1981 | Examiner <br> MASSALSKI | |

EPO Form 1503.1  06.78